# EUROPÄISCHE PATENTSCHRIFT

(11) **EP 3 762 902 B1**
(45) Veröffentlichungstag und Bekanntmachung des Hinweises auf die Patenterteilung: **04.01.2023**
(21) Anmeldenummer: 19795346.6
(22) Anmeldetag: 23.10.2019
(51) Int. Cl.: G07C 9/00

(54) **ÜBERWACHUNGSSYSTEM UND VERFAHREN ZUR VERFOLGUNG VON FAHRZEUGEN**
MONITORING SYSTEM AND METHOD FOR TRACKING VEHICLES
SYSTÈME DE SURVEILLANCE ET PROCÉDÉ POUR LE SUIVI DE VÉHICULES

(30) Priorität: 25.10.2018 EG 2018101694; 30.07.2019 AT 506872019
(43) Veröffentlichungstag der Anmeldung: 13.01.2021
(73) Patentinhaber: Gharb, Samy, 8038 Zürich (CH)
(72) Erfinder: Gharb, Samy, 8038 Zürich (CH)
(86) Internationale Anmeldenummer: PCT/IB2019/059055
(87) Internationale Veröffentlichungsnummer: WO 2020/084513

(56) Entgegenhaltungen:
- EP-A1- 3 113 118
- EP-A2- 2 573 709
- DE-A1- 10 243 492
- DE-A1- 19 836 087
- DE-A1-102010 029 811
- DE-U1-202010 006 825
- US-A1- 2012 181 340
- Anonymous: "Ab Januar 2015: Was soll der QR-Code auf dem Kennzeichen? | Express", , 28 November 2015 (2015-11-28), pages 1-8, XP055908272, Retrieved from the Internet: URL:https://www.express.de/ratgeber/motor/ ab-januar-2015-was-soll-der-qr-code-auf-de m-kennzeichen-30495?cb=1649057132267 [retrieved on 2022-04-04]

## Beschreibung

Die Erfindung betrifft ein Überwachungssystem zur Verfolgung von Fahrzeugen, bspw. Autos, Bussen oder Yachten.

Durch den Betrieb eines solchen Systems können Fahrzeuge aller Art, insbesondere Autos, Busse oder Yachten, sowie indirekt die in den Fahrzeugen befindlichen Personen überwacht und Ihre Wege verfolgt werden. Hierbei wird mithilfe von technischen Einrichtungen die Position der Fahrzeuge erfasst. Insbesondere können die Ein- und Ausfahrtzeiten in/aus einer Stadt oder einem Land sowie das Befahren von Autobahnen, anderen Straßen oder Wasserstraßen durch ein entsprechendes Fahrzeug festgestellt werden. Ein Überwachungssystem von an Fahrzeugen angeordneten Kennzeichen ist aus der US 2012/0181340 A1 bekannt.

Die im Stand der Technik bekannten Überwachungssysteme sind allerdings relativ schwerfällig und langsam. Es besteht daher die Aufgabe, eine einfache und schnelle Möglichkeit zur Erfassung und Verfolgung von Fahrzeugen aller Art bereitzustellen.

Erfindungsgemäß ist daher ein Überwachungssystem zur Verfolgung von Fahrzeugen, bspw. Autos, Bussen oder Yachten, gemäß Anspruch 1 vorgesehen, umfassend optische Lesegeräte, die ausgebildet sind, um maschinenlesbare Codes zu erfassen, wobei die maschinenlesbaren Codes auf Fahrzeugen, insbesondere den Nummernschildern der Fahrzeuge angebracht sind. Das Überwachungssystem umfasst ein optisches Lesegerät und ein Nummernschild eines Fahrzeugs mit zumindest zwei maschinenlesbaren Codes, wobei die maschinenlesbaren Codes voneinander verschieden sind, wobei die maschinenlesbaren Codes in verschiedenen Bereichen des Nummernschilds angeordnet sind. Die zumindest zwei maschinenlesbaren Codes sind als Barcode und als Datamatrixcode oder als Barcode und QR-Code oder als Datamatrixcode und als QR-Code ausgebildet. Bei der gegenständlichen Erfindung werden die maschinenlesbaren Codes, die auf Nummernschildern aufgedruckt sind, elektronisch mit optischen Lesegeräten, insbesondere Standard- oder Langstrecken-(Bar)Codescannern mit einer Reichweite von bis zu 21 Metern, überprüft und überall schnell gelesen, um die Fahrzeuge auf Straßen oder im Wasser während der Fahrt überprüfen zu können. Hierbei wird der Verkehrsfluss nicht gestört und die einfache und schnelle Beschlagnahme von Autos mit gefälschten oder gestohlenen Nummernschildern wird ermöglicht.

Der maschinenlesbare Code, insbesondere der Barcode, ist auf den Nummernschildern aufgedruckt. Drucken ist eine bekannte und relativ günstige Möglichkeit, um Codes auf Fahrzeugen anzubringen. Alternativ können die Codes auch auf andere Art und Weise auf den Fahrzeugen, insbesondere den Nummernschildern, aufgebracht werden. Die maschinenlesbaren Codes bzw. die Daten des Codes sind in einer elektronischen Datenbank gespeichert und beinhalten eine eindeutig dem Fahrzeug zugeordnete Nummer, insbesondere das Behördliche Kennzeichen des Fahrzeuges.

Die Daten des maschinenlesbaren Codes sind bevorzugt verschlüsselt, um eine Fälschung des Codes zu verhindern bzw. zu erschweren. Maschinenlesbare Codes, insbesondere Barcodes, 2D-Codes (bspw. Datamatrix- oder QR-Codes) oder 3D-Codes, können automatisch mithilfe von Scannern gelesen werden, wobei der maschinenlesbare Code die Daten darstellt, indem durch die Anordnung und Breite der Linien bzw. Felder und die Zwischenräume Information bereitgestellt wird.

Barcodes und 2D-Codes werden üblicherweise mithilfe von speziellen Scannern gelesen und gescannt und mit auf Geräten verfügbarer Übersetzungssoftware in für Menschen leicht lesbare Symbole, insbesondere Buchstaben und Ziffern, übersetzt. Alternativ können entsprechende Anwendungen auf Mobiltelefonen oder anderen tragbaren elektronischen Geräten zum Auslesen von Codes genutzt werden.

Insbesondere eindimensionale Barcodes sind in Anwendungssoftware für Geschäfte und Controller weit verbreitet, wobei Mitarbeiter Arbeitsaufträge überprüfen können, ihre Arbeitszeit verfolgen können, und einzelne Elemente, bspw. Waren überprüfen können.

Code-Scanner können Codes an vielen Orten besser und schneller lesen, z. B. in Lagern, Supermärkten und Hotels, als Menschen. Diese Code-Scanner können entweder über ein Kabel oder, bevorzugt, kabellos, bspw. über Bluetooth mit einem Computer verbunden sein, der die vom Scanner eingelesenen Daten weiterverarbeitet. Kabellose Scanner sind insbesondere dann von Vorteil, wenn der Benutzer eine große Reichweite aufweisen soll und/oder an verwinkelten Orten arbeitet.

Standard-Barcodescanner sind für das Lesen von Barcodes in der Nähe des Scanners konzipiert und werden beispielsweise im Einzelhandel, im Gesundheitswesen und in Büros eingesetzt, um die Waren oder das Inventar verwalten und überprüfen zu können. Im Gegensatz dazu ist ein Langstreckenscanner (mit einer Reichweite von bis zu 21 m) in Umgebungen, in denen die Codes schwer zugänglich sind, wie z. B. in einem Lager, einem Hof oder einer Fertigungsanlage, von großem Vorteil. Mit einem Code-Scanner mit großer Reichweite kann der Arbeiter bspw. auf ein hohes Element in einem Regal oder sogar auf einer

Ladeplattform auf einem Gabelstapler stehen und dann den gewünschten Code scannen, ohne dass es erforderlich ist, den Scanner in die unmittelbare Umgebung des Codes zu bringen. Im Rahmen der Erfindung ermöglicht der Einsatz eines Langstreckenscanners das Auslesen eines Codes aus weiter Entfernung, bspw. durch am Rand einer Straße aufgestellte Scanner.

Der Begriff Langstrecke bedeutet nicht, dass dieser Code-Scanner nicht auch effizient aus nächster Nähe arbeitet.

Hierbei sind Geräte bevorzugt, die so effizient wie möglich im Bereich von wenigen Zentimetern bis zu einer Entfernung von bis zu 70 Fuß und etwa 21 Metern sind.

Erfindungsgemäß sind insbesondere Auto- und Fahrzeug-Nummernschilder vorgesehen, die mit zwei maschinenlesbaren Codes, die als Barcode und Datamatrixcode oder als Barcode und QR-Code oder als Datamatrixcode und QR-Code ausgebildet sind. Dadurch werden Code-Nummernschilder erhalten, die überall von Standard oder Langstrecken-Codescannern überprüft werden können, auch auf größere Entfernungen bspw. bis zu 21 Metern. Hierdurch kann schnell, sicher und einfach jedes Fahrzeug anhand seines maschinenlesbaren Codes erkannt und überprüft werden. Insbesondere werden hierdurch die Fälschung sowie die missbräuchliche Verwendung von Nummernschildern erschwert, vor allem wenn einem Nummernschild eindeutig ein Fahrzeug zugeordnet ist.

Die vorliegende Erfindung ist besonders vorteilhaft, da hohe Geschwindigkeiten bei der Überprüfung und Inspektion von Autos und anderen Fahrzeuge durch Standard- oder Langstrecken- (Bar) Code-Scanner ermöglicht werden und der Verkehr nicht gestört werden muss, weil Fahrzeuge zur Überprüfung weder anhalten noch die Geschwindigkeit reduzieren müssen.

Einerseits kann das erfindungsgemäße System für die Prüfung und Kontrolle der Kennzeichen bzw. der Fahrzeuge, insbesondere der Richtigkeit der Kennzeichen eingesetzt werden.

Andererseits ist es mithilfe des erfindungsgemäßen Systems möglich, in Verbindung mit Systemen zur Zahlung von elektronischen Straßengebühren, bspw. bei der Einfahrt in eine Stadt mithilfe von Standard- oder Langstrecken (Bar) Code-Scannern und mit diesen verbundenen Computern die Fahrzeuge automatisch zu verfolgen und ihre Bewegungen aufzuzeichnen. Anschließend kann anhand der gewonnenen Bewegungsdaten die ggf. zu bezahlende Gebühr ermittelt werden und über herkömmliche Bezahlsysteme verrechnet werden. Hierfür ist es besonders bevorzugt, wenn stationäre Code-Scanner eingesetzt werden, die bspw. im Bereich der Stadteinfahrten angeordnet sind. Darüber hinaus wird durch die Erfindung ermöglicht, Parkstrafen schneller und effizienter einzuheben, indem die Parkaufsichtsorgane mit tragbaren Code-Scannern ausgerüstet werden und ggf. lediglich den Code eines Fahrzeuges einscannen müssen, wodurch die entsprechende Strafvorschreibung ausgelöst wird.

Weiters können im Falle eines Unfalls eines mit einem Code versehenen Fahrzeuges Rettungskräfte oder Familienmitglieder den letzten Standort des Besitzers des Autos durch die letzte Erfassung des auf dem Fahrzeug angebrachten maschinenlesbaren Codes ermitteln. Dadurch kann leichter festgestellt werden, in welchem Bereich sich das Fahrzeug aufhält bzw. wo es ungefähr verunfallt ist. Hierzu ist bevorzugt vorgesehen, dass in der elektronischen Datenbank die Uhrzeit und der Ort einer Erfassung durch einen Scanner gespeichert sind. Die elektronische Datenbank umfasst hierbei bevorzugt alle Erfassungen eines Codes, wodurch ein Bewegungsprofil des Fahrzeuges erstellt werden kann. Die einzelnen Scanner können mithilfe eines Kabels oder auch kabellos mit einem Computer verbunden sein, auf welchem die elektronische Datenbank gespeichert ist. Bevorzugt erfolgt das Übermitteln der Daten an die elektronische Datenbank automatisch nach einem Scanvorgang.

Beispielsweise kann ein System, welches nicht Teil der Erfindung ist, folgende Komponenten umfassen:
einen Hauptcomputer , ein Nummernschild mit einem maschinenlesbaren Code, ein optisches Lesegerät, insbesondere einen Standard- oder Langstrecken-Code-Scanner, ein Zahlungssystem für Straßengebühren, ein Terminal für Bankzahlungen, einen Büroscanner, ein einem Empfänger zugeordnetes Mobiltelefon, ein mobiles Modem zum Senden eines Datensatzes und eine Steuereinheit. Mithilfe dieser Komponenten kann eine elektronische Registrierung bei der Zahlung von Straßengebühren erfolgen, sodass bspw. die Ein- und Ausfahrten in bzw. aus Städten elektronisch überwacht und entsprechend verarbeitet werden können. Über den Hauptcomputer kann der Code registriert werden und bspw. dem Führerschein des Fahrzeugbesitzers zugeordnet werden. Im Betrieb wird der Code auf dem Nummernschild durch einen Scanner ausgelesen und an das Zahlungssystem für Straßengebühren gesandt. Nach der Zahlung kann eine Zahlungsbestätigung an das Mobiltelefon des Fahrzeugbesitzers gesandt werden.

Der Datensatz kann zumindest die Telefonnummer eines zuständigen Polizeireviers und einen Zahlungsbeleg für die Gebühr beinhaltet.

Das System kann derart ausgebildet sein, um den Datensatz regelmäßig über die Steuereinheit zu senden .

Weiters ist bevorzugt vorgesehen, dass zumindest ein optisches Lesegerät als stationäres Lesegerät ausgebildet ist und bevorzugt zumindest ein optisches Lesegerät als mobiles, bevorzugt tragbares, Lesegerät ausgebildet ist.

Bei einer besonders bevorzugten Ausführung sind auf dem Fahrzeug mehr als zwei maschinenlesbarer Code, bspw. drei maschinenlesbare Codes angeordnet. Erfindungsgemäß sind zwei verschiedene Codes, bspw. ein Barcode und ein 2D-Code, vorgesehen, die im Wesentlichen die gleichen Daten (die gleichen Informationen) aufweisen, insbesondere eine eindeutige Fahrzeugkennung. Hierbei wird einerseits ein redundantes System geschaffen, bei welchem lediglich einer von mehreren Codes lesbar sein muss, während die anderen verschmutzt oder beschädigt sein können. Weiters wird die Fälschungssicherheit erhöht, weil hierbei zwei Codes gleich gefälscht werden müssen.

Erfindungsgemäß ist weiters ein Verfahren zur Überwachung von Fahrzeugen, bspw. Autos, Bussen oder Yachten mit einem Überwachungssystem nach Ansprüchen 1 bis 4 vorgesehen.

Die Erfindung wird nachfolgend anhand eines in der Zeichnung schematisch dargestellten Ausführungsbeispiels näher erläutert. In dieser zeigen Fig. 1 und Fig. 2 einige Komponenten eines erfindungsgemäßen Systems, Fig. 3 und Fig. 4 beispielhafte Ablaufdiagramme eines erfindungsgemäßen Systems und Fig. 5 erfindungsgemäße Nummernschilder.

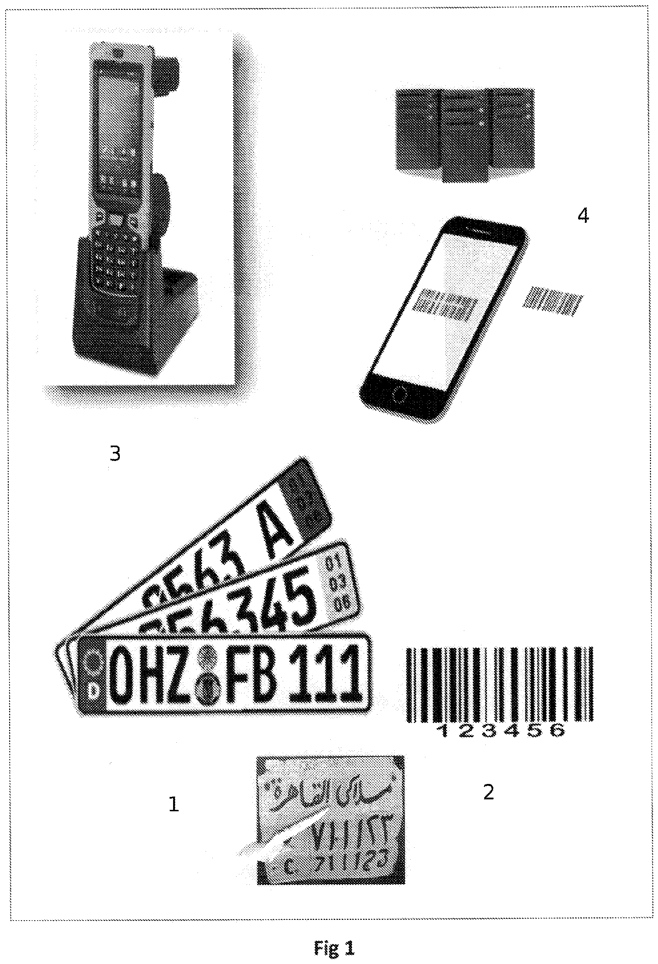

Fig. 1 zeigt beispielhaft einige Nummernschilder 1, die mit einem maschinenlesbaren Code 2, z.B. einem Barcode versehen sein können. Bevorzugt ist der Barcode auf den Nummerntafeln aufgedruckt. Weiters ist ein im Rahmen der Erfindung einsetzbares optisches Lesegerät 3 sowie ein Mobiltelefon mit einer Scananwendung sowie einem mit dem Mobiltelefon verbundenen Server 4 dargestellt.

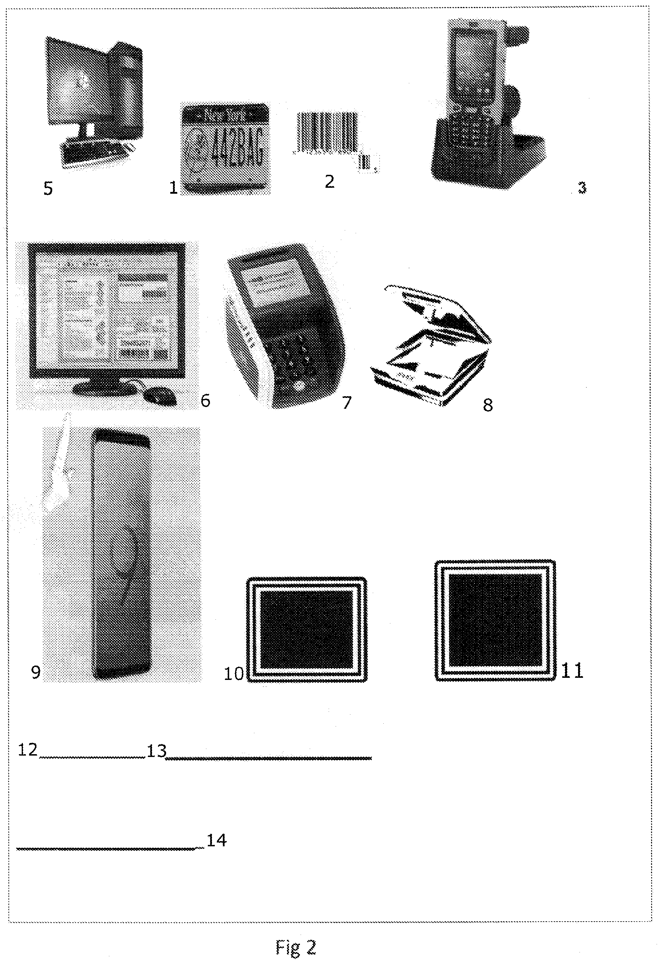

Fig. 2 zeigt weitere Komponenten des Überwachungssystems. Das System besteht aus einem Hauptcomputer 5, einem Nummernschild 1 mit einem maschinenlesbaren Code 2, einem als Standard- oder Längstrecken-Barcode-Scanner ausgebildeten optischen Lesegerät 3, einem Zahlungssystem für Straßengebühren 6, einem Terminal für Bankzahlungen 7, einem Büroscanner 8, einem Mobiltelefon 9, einem mobilen Modem zum Senden eines Datensatzes 10 und einer Steuereinheit 11. Weiters sind Verbindungsleitungen 12, 13 und 14 dargestellt. Mithilfe dieser Komponenten kann eine elektronische Registrierung bei der Zahlung von Straßengebühren erfolgen, sodass bspw. die Ein- und Ausfahrten in bzw. aus Städten elektronisch überwacht und entsprechend verarbeitet werden können. Insbesondere ist vorgesehen, dass der Code auf dem Fahrzeug mit dem amtlichen Führerscheinregister sowie dem Gebührenzahlungssystem verbunden ist.

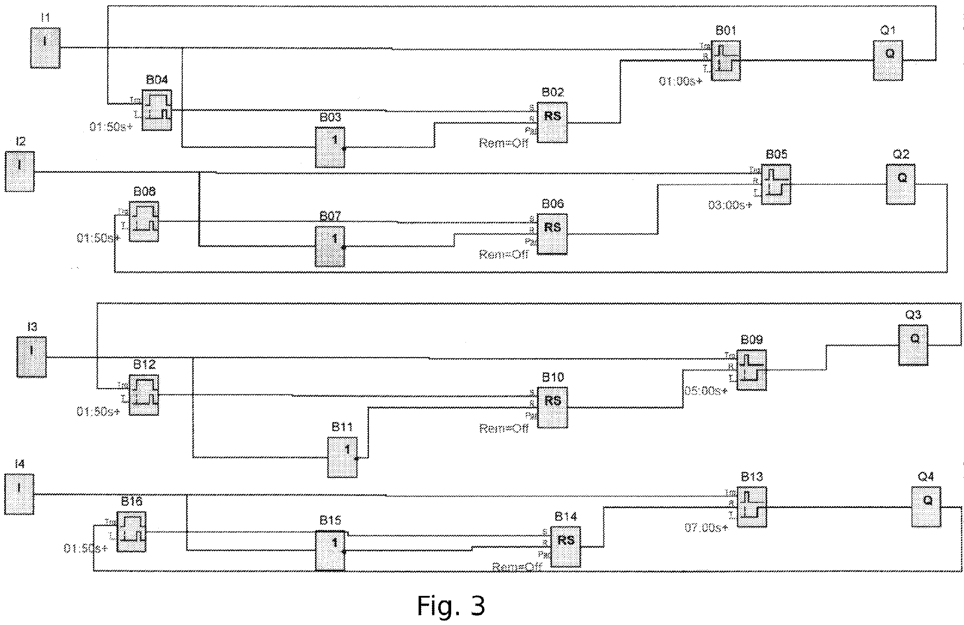

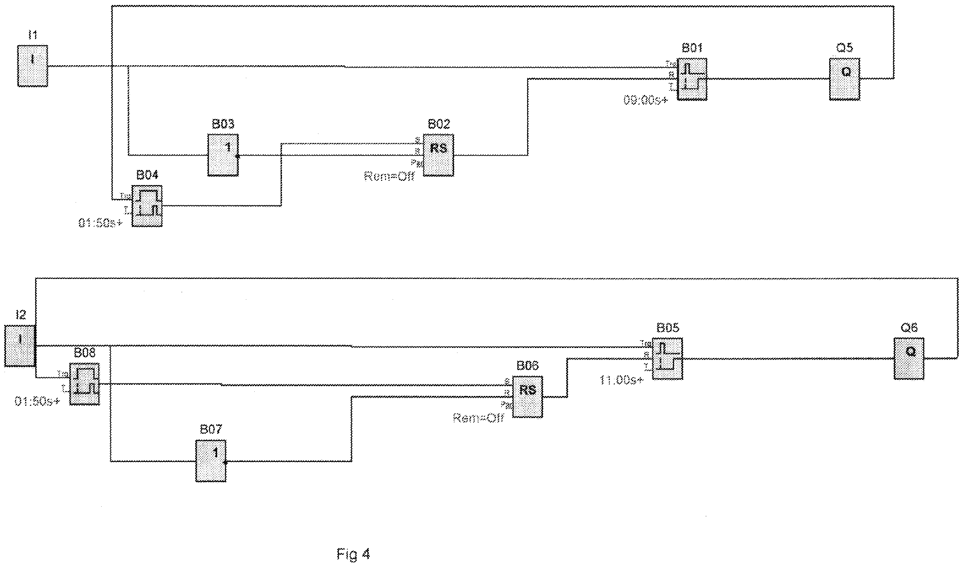

Fig. 3 und Fig. 4 zeigt einen Übersichtsschaltplan der Steuereinheit 11 (Fig. 2).

Es besteht aus dem Öffnen und Schließen mit Daten in Block 1 bis Block 6 (Ql bis Q6).

Block 1: Die mobile Modem-Telefonleitung wird geöffnet, um Informationen zu senden.

Block 2 : Eine Datennachricht in Form des Empfangs der Zahlung der Straßengebühr inklusive Ort, Zeit und Datum, Autonummer und auf der Autolizenz gedruckte Codenummer wird gesendet. Das Signal, wird in einem Gebührenzahlungssystem verarbeitet.

Block 3: Mobiles Modem OK.

Block 4: Die Informationen für den Fahrer, für die Gebühr, sowie die Telefonnummer der Verkehrspolizei des Autobahnbereichs wird an das Mobiltelefon gesendet.

Block 5: Senden

Block 6: Die mobile Modem-Telefonleitung wird geschlossen.

Die Funktionen sind in der folgenden Tabelle zusammengefasst.

| | |
|---|---|
| Ql: | Öffnen der mobilen Modem-Telefonleitung |
| 1 | Sekunde -1,50 Sekunden |
| Q2 | Datenmeldung und Foto der Zahlung der Gebühren |
| 3 | Sekunden -1,50 Sekunden |
| Q | 3 Mobiles Modem OK |
| 4 | Sekunden -1,50 Sekunden |
| Q | 4 Die Informationen für den Fahrer, die Gebühr, sowie die Telefonnummer der Verkehrspolizei des Autobahnbereichs wird an das Mobiltelefon gesendet. |
| 5 | Sekunden -1,50 Sekunden |
| Q | 5 OK |
| 7 | Sekunden -1,50 Sekunden |
| Q | 6 schließt das mobile Modem. |
| 9 | Sekunden -1,50 Sekunden |

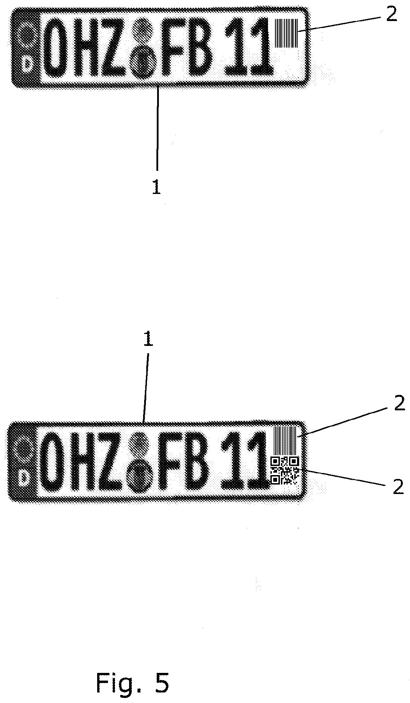

In Fig. 5 ist oben ein Nummernschild 1 mit einem als Barcode ausgebildeten maschinenlesbaren Code 2 dargestellt, während unten ein Nummernschild 1 mit einem Barcode 2 sowie einem zusätzlichen 2D-Code 2 dargestellt ist.

## Patentansprüche

1. Überwachungssystem zur Verfolgung von Fahrzeugen, bspw. Autos, Bussen oder Yachten, wobei das Überwachungssystem optische Lesegeräte umfasst, welche ausgebildet sind, um maschinenlesbare Codes (2) zu erfassen, wobei das Überwachungssystem ein Nummernschild eines Fahrzeugs mit zumindest zwei der maschinenlesbaren Codes (2) aufweist, wobei die maschinenlesbaren Codes (2) auf dem Nummernschild (1) aufgedruckt sind, wobei die maschinenlesbaren Codes (2) voneinander verschieden sind, wobei die maschinenlesbaren Codes in verschiedenen Bereichen des Nummernschilds (1) angeordnet sind, wobei die zumindest zwei maschinenlesbaren Codes als Barcode und als Datamatrixcode oder als Barcode und als QR-Code oder als Datamatrixcode und als QR-Code ausgebildet sind, wobei die optischen Lesegeräte als Standard- oder Langstrecken-Codescanner ausgebildet sind, wobei der Langstrecken-Codescanner eine Reichweite von bis zu 21 Meter aufweist, sodass ein maschinenlesbarer Code (2) aus 21 Meter Abstand zum optischen Lesegerät gelesen und überprüft werden kann, wobei die maschinenlesbaren Codes (2) bzw. die Daten der maschinenlesbaren Codes (2) in einer elektronischen Datenbank des Überwachungssystems gespeichert sind und jeweils die gleiche eindeutig dem Fahrzeug zugeordnete Nummer umfassen.

2. Überwachungssystem nach einem der vorangegangenen Ansprüche, **dadurch gekennzeichnet, dass** die Daten der maschinenlesbaren Codes (2) verschlüsselt sind.

3. Überwachungssystem nach Anspruch 1, **dadurch gekennzeichnet, dass** in der elektronischen Datenbank die Uhrzeit und der Ort einer Erfassung durch ein optisches Lesegerät (3) gespeichert sind.

4. Überwachungssystem nach einem der vorangegangenen Ansprüche **dadurch gekennzeichnet, dass** zumindest ein optisches Lesegerät (3) als stationäres Lesegerät ausgebildet ist und zumindest ein optisches Lesegerät (3) als mobiles Lesegerät ausgebildet ist.

5. Verfahren zur Überwachung von Fahrzeugen, bspw. Autos, Bussen oder Yachten, mit einem Überwachungssystem nach einem der vorangegangenen Ansprüche 1 bis 4, wobei mithilfe der optischen Lesegeräte (3) die zwei maschinenlesbaren Codes erfasst werden.

## Claims

1. Monitoring system for tracking vehicles, e.g. cars, buses or yachts, wherein the monitoring system comprises optical readers configured to acquire machine-readable codes (2), wherein the monitoring system has a licence plate of a vehicle with at least two of the machine-readable codes (2), wherein the machine-readable codes (2) are printed on the licence plate (1), wherein the machine-readable codes (2) are different from one another, wherein the machine-readable codes are arranged in different regions of the licence plate (1), wherein the at least two machine-readable codes are configured as barcode and as data matrix code or as barcode and as QR code or as data matrix code and as QR code, wherein the optical readers are configured as standard or long-range code scanners, wherein the long-range code scanner has a range of up to 21 metres, such that a machine-readable code (2) can be read and checked from a distance of 21 metres with respect to the optical reader, wherein the machine-readable codes (2) or the data of the machine-readable codes (2) are stored in an electronic database of the monitoring system and in each case comprise the same number uniquely assigned to the vehicle.

2. Monitoring system according to any of the preceding claims, **characterized in that** the data of the machine-readable codes (2) are encrypted.

3. Monitoring system according to Claim 1, **characterized in that** the time of day and the location of acquisition by an optical reader (3) are stored in the electronic database.

4. Monitoring system according to any of the preceding claims, **characterized in that** at least one optical reader (3) is configured as a stationary reader and at least one optical reader (3) is configured as a mobile reader.

5. Method for monitoring vehicles, e.g. cars, buses or yachts, with a monitoring system according to any of the preceding Claims 1 to 4, wherein the two machine-readable codes are acquired with the aid of the optical readers (3) .

## Revendications

1. Système de surveillance pour le suivi de véhicules, par exemple d'automobiles, de bus ou de yachts, le système de surveillance comprenant des lecteurs optiques qui sont conçus pour acquérir des codes lisibles par machine (2), le système de surveillance comportant une plaque d'immatriculation d'un véhicule présentant au moins deux des codes lisibles par machine (2), les codes lisibles par machine (2) étant imprimés sur la plaque d'immatriculation (1), les codes lisibles par machine (2) étant différents les uns des autres, les codes lisibles par machine étant disposés dans des zones différentes de la plaque d'immatriculation (1), les au moins deux codes lisibles par machine étant conçus sous la forme d'un code à barres et d'un code Datamatrix ou d'un code à barres et d'un code QR ou d'un code Datamatrix et d'un code QR, les lecteurs optiques étant conçus sous la forme de scanners de code classiques ou à longue portée, le lecteur de code à grande portée présentant une portée allant jusqu'à 21 mètres, de sorte qu'un code lisible par machine (2) peut être lu et vérifié à une distance de 21 mètres du lecteur optique, les codes lisibles par machine (2) ou les données des codes lisibles par machine (2) étant respectivement stockés dans une base de données électronique du système de surveillance et comprenant respectivement le même numéro associé de manière unique au véhicule.

2. Système de surveillance selon l'une quelconque des revendications précédentes, **caractérisé en ce que** les données des codes lisibles par machine (2) sont chiffrées.

3. Système de surveillance selon la revendication 1, **caractérisé en ce que** l'heure et le lieu d'une acquisition par un lecteur optique (3) sont stockés dans la base de données électronique.

4. Système de surveillance selon l'une quelconque des revendications précédentes, **caractérisé en ce qu'**au moins un lecteur optique (3) est conçu sous la forme d'un lecteur fixe et **en ce qu'**au moins un lecteur optique (3) est conçu sous la forme d'un lecteur mobile.

5. Procédé de surveillance de véhicules, par exemple d'automobiles, de bus ou de yachts, comprenant un système de surveillance selon l'une quelconque des revendications 1 à 4 précédentes, dans lequel les deux codes lisibles par machine sont acquis à l'aide des lecteurs optiques (3).
